# EUROPEAN PATENT SPECIFICATION

(11) **EP 2 210 533 B1**
(45) Date of publication and mention of the grant of the patent: **28.12.2011**
(21) Application number: 09013426.3
(22) Date of filing: 23.10.2009
(51) Int. Cl.: A47G 1/14, F16M 11/10, G06F 1/00

(54) **Support structure of display device**
Stützstruktur für Anzeigevorrichtungen
Structure de support de dispositif d'affichage

(30) Priority: 15.01.2009 TW 98101361
(43) Date of publication of application: 28.07.2010
(73) Proprietor: HannStar Display Corp., Wugu Dist. New Taipei City (TW)
(72) Inventor: Wang, Bo-Ren, Taipei City (TW); Wu, Chien-Chung, Yangmei Township Taoyuan County (TW)
(74) Representative: Hager, Thomas Johannes

(56) References cited:
- CN-Y- 201 088 359
- TW-U- 336 468

## Description

The present invention relates to a support structure with display device according to claim 1.

A typical photo frame normally includes a shell and a stand, and the stand is fixed on the shell. Another support structure for digital photo frame uses a hinge to connect a side of the shell and a side of the stand. The mechanism design of the hinge is more complicated, and the costs of manufacture and material are higher. In the first support structure, problems of the support structure having an oblique center of gravity and the flexibility of the angle range for usage being small exist. In the second support structure, problems of being not easy to assemble and disassemble and cost of manufacture and material being high exist.

Taiwan patent number M336468 discloses a fastening structure of a digital photo frame, and the digital photo frame has a shell and an axial hole. The fastening structure includes a plurality of elastic units and a stand. Each of the elastic units has a tenon, and the elastic unit is disposed within the axial hole in a ringed formation. The stand has a rotating shaft and a trough. The rotating shaft is disposed at an end of the stand, and the trough is disposed on the rotating shaft. When the rotating shaft is inserted into the axial hole, and the trough and one of the tenons engage with each other, the shell is at a position, and the stand supports the shell. When the rotating shaft is used as an axis to perform a rotating movement until the trough and another tenon engaging with each other, the shell is at another position, and the stand supports the shell. This patent document discloses then a support structure with display device according to the preamble of claim 1.

This in mind, the present invention aims at providing a support structure with display device that reduce cost and increase the flexibility of the angle range for usage.

This is achieved by a support structure with display device according to claim 1. The dependent claims pertain to corresponding further developments and improvements.

As will be seen more clearly from the detailed description following below, the claimed support structure with display device includes a display device and a stand. The display device includes a back board having an axial hole and a second hole and a first elastic unit. The second hole is disposed at a side of the axial hole. The first elastic unit protrudes inside the second hole, and an end of the first elastic unit is connected to the back board. The stand is used for supporting the display device, and the stand includes a stand body, an axle tenon disposed on an end of the stand body and a first tenon disposed on an end of the stand body. The axle tenon is regarded as an axis to rotate the stand and the back board oppositely about the axis while the axle tenon is inserted into the axial hole and fastened in the axial hole. The first elastic unit is pushed by the first tenon so as to be shifted in the second hole while the first tenon is inserted into the second hole and turned around the axis in the second hole between the first elastic unit and the axial hole.

In the following, the invention is further illustrated by way of example, taking reference to the accompanying drawings. Thereof:
Fig. 1 is a schematic diagram illustrating a photo frame according to another prior art,
Fig. 2 is a schematic diagram illustrating a support structure with display device according to a first embodiment of the present invention,
Fig. 3 is a schematic diagram illustrating a structure of the display device inserted with the stand according to the first embodiment of the present invention,
Fig. 4 is a schematic diagram illustrating a cross sectional view of Fig. 2 along with line AA',
Fig. 5 is a schematic diagram illustrating a structure of the display device inserted with the stand according to the first embodiment of the present invention,
Fig. 6 is a schematic diagram illustrating a structure of another example of the display device according to the first embodiment of the present invention,
Fig. 7 is a schematic diagram illustrating a structure of another example of the display device according to the first embodiment of the present invention,
Fig. 8 is a schematic diagram illustrating a support structure with display device according to a second embodiment of the present invention,
Fig. 9 is a schematic diagram illustrating a support structure with display device according to a third embodiment of the present invention, and
Fig. 10 is a schematic diagram illustrating a structure of the display device inserted with the stand according to the third embodiment of the present invention.

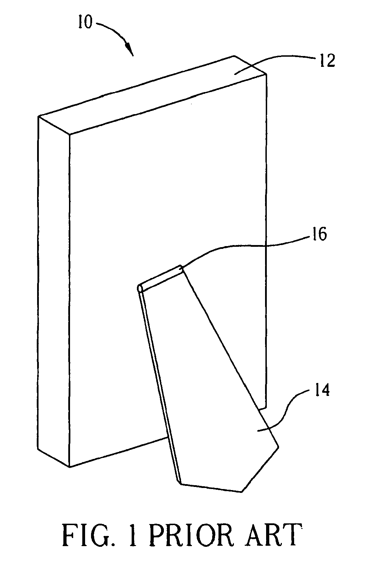

Fig. 1 is a schematic diagram illustrating a photo frame according to another prior art. As shown in Fig. 1, the photo frame 10 has a shell 12, a stand 14 and a shaft part 16. The shaft part 16 can be disposed on the shell 12 or the stand 14, and connects the stand 14 and the shell 12, so that the stand 14 can support the shell 12 while using the shaft part 16 as a rotating axle to open the stand 14. However, the stand 14 in this support structure is fixed on the shell, and no matter whether the photo frame 10 is disposed upright or horizontally, the angles between the stand 14 and the shell 12 in all dispositions are the same.

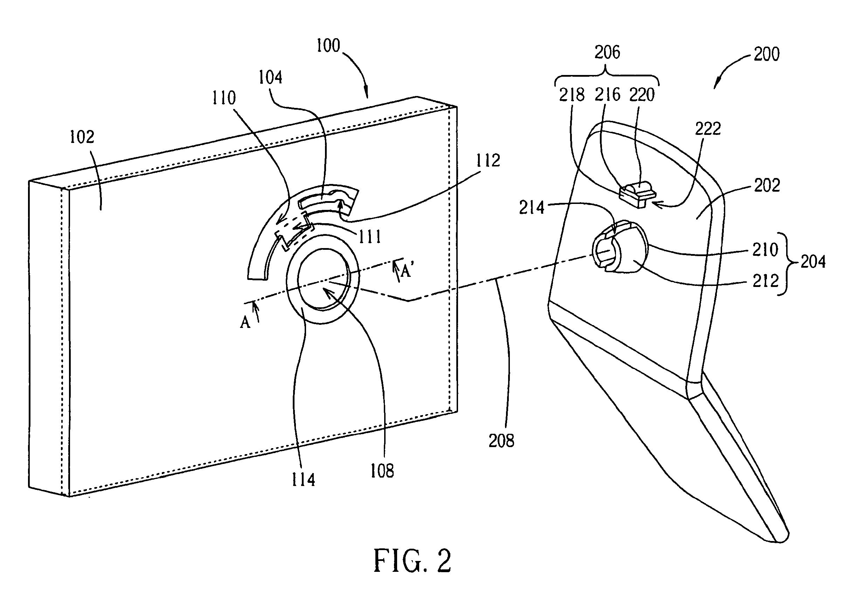

Refer to Fig. 2, which is a schematic diagram illustrating a support structure with display device according to a first embodiment of the present invention. As shown in Fig. 2, the support structure with display device of the present invention includes a display device 100 and a stand 200. The stand 200 is used for supporting the display device 100. The display device 100 includes a back board 102 and at least one first elastic unit 104 connected to the back board 102 or formed with the back board 102 integrally. The display device 100 has a front surface and a back surface. The front surface is a displaying surface for displaying digital pictures, and the back board 102 and the first elastic unit 104 are disposed at the back surface of the display device 100 and used to be supported by the stand 200. The back board 102 has an axial hole 108, a second hole 110 and a sub-hole 111, and the second hole 110 is disposed at a side of the axial hole 108. The sub-hole 111 is connected to a side of the second hole 110 facing the axial hole 108. In addition, the outside surface of the back board 102 is not limited to being flat or non-flat. Furthermore, the first elastic unit 104 is protruded inside the second hole 110, and an end of the elastic unit 104 is connected to the back board 102. The surface of the elastic unit 104 facing the axial hole 108 has at least one rotationally retaining cavity 112. In this embodiment, the elastic unit 104, the back board 102 and the display device 100 can be composed of the same materials, such as acrylonitrile-butadiene-styrene (ABS) copolymer, but the present invention is not limited to this.

Furthermore, the stand 200 includes a stand body 202, an axle tenon 204 and a first tenon 206. The axle tenon 204 is disposed on an end of the stand body 202, and the first tenon 206 is also disposed on the same end of the stand body 202. The first tenon 206 is disposed at a side of the axle tenon 204. The stand 200 also can be composed of the materials, such as ABS copolymer, but the present invention is not limited to this. It should be noted that the axle tenon 204 can be inserted into the axial hole 108 and fastened in the axial hole 108 so as to use the axle tenon 204 as an axis 208 to turn the stand 200 and the display device 100 oppositely around the axis 208. In addition, after the axle tenon 204 is inserted into the axial hole 108, the first tenon 206 can be inserted into the second hole 110 and the sub-hole 111 and turned around the axis 208 in the second hole 110 and the sub-hole 111 between the first elastic unit 104 and the axial hole 108. The first elastic unit 104 is pushed by the first tenon 206 so as to be shifted or deformed in the second hole 110 and the sub-hole 111.

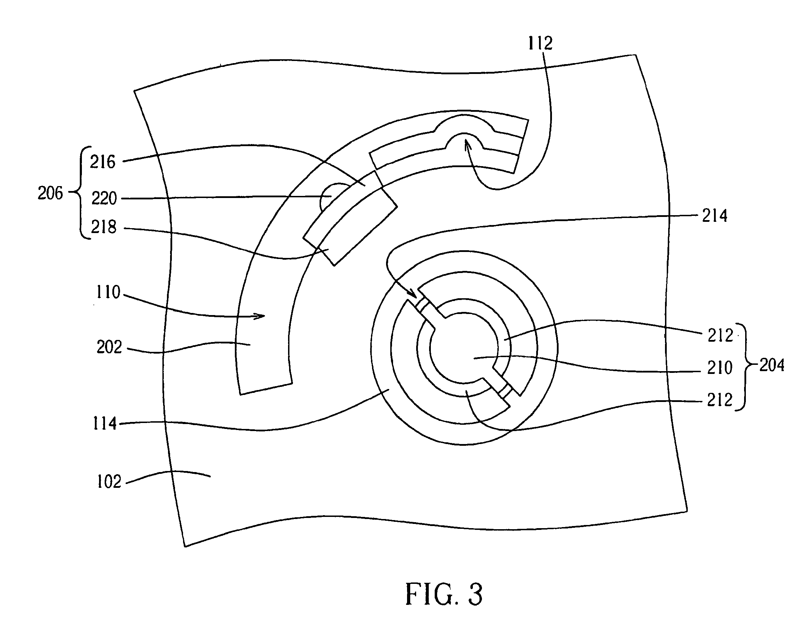

In order to clearly describe the fastening relation between the display device and the stand, refer to Fig. 3 together with Fig. 1 and Fig. 2. Fig. 3 is a schematic diagram illustrating a structure of the display device inserted with the stand according to the first embodiment of the present invention. As shown in Fig. 2 and Fig. 3, the axle tenon 204 includes an axle tenon body 210 and a conoid 212. The axle tenon body 210 is disposed on the stand body 202, and cross sectional areas of the axle tenon body 210 along with a direction of the axis 208 are substantially the same. This means that the axle tenon body 210 is a pillar-shaped structure. The conoid 212 is a cone-shaped structure, and the bottom surface of the conoid 212 is in contact with the axle tenon body 210. The conoid 212 taper off to the axis 208, and the diameters of the cross sectional areas is different as the distances between the cross sectional areas and the surface of the stand body 202 are different. The conoid 212 can be a solid structure or a hollow structure. In addition, the cross sectional area of the axle tenon body 210 is smaller than the area of the axial hole 108, and the most width of the bottom surface of the conoid 212 is substantially larger than the diameter of the axial hole 108. Furthermore, the back board 102 surrounding the conoid 210 or the axial hole 108 is formed by materials with elastic characteristic, so that the conoid 212 can be inserted into the axial hole 108 and be fastened. In this embodiment, the conoid 212 of the axle tenon 204 has a first slot 214, and the first slot 214 passes through the top of the conoid 212, so that the conoid 212 at two sides of the first slot 214 has an elastic characteristic of bending toward the inside of the first slot 214 while inserting into the axial hole 108 or pulling out the conoid 212 from the axial hole 108. This means that the conoid 212 at two sides of the first slot 214 can be pushed by the back board 102 to the axis 208, and the conoid 212 be shifted or deformed in the axial hole 108 so as to help the axle tenon 204 to be easily inserted into the axial hole 108 or be pulled out from the axial hole 108. The axle tenon 204 of the present invention is not limited to only having a first slot 214, and the axle tenon 204 of the present invention also can have a plurality of first slots so as to be more easily inserted into the axial hole 108 or be pulled out from the axial hole 108. For having the same effect, the top of the conoid 212 also can have a cavity not passing through 212. In addition, the display device 100 surrounding the axial hole 108 in this embodiment further includes a plurality ring fastener 114 surrounding the axial hole 108, and the ring fastener 114 can be used to stop the axle tenon 204 being loosed and apart from the axial hole 108. The ring fastener 114 can be formed with the back board 102 integrally or by other methods. While inserting the axle tenon 204 into the axial hole 108, the top of the conoid 212 of the axle tenon 204 is first inserted into the axial hole 108, so that the conoid 212 can pass through the axial hole 108 depending on the elastic characteristic of the conoid 212. Furthermore, the first slot214 also help the conoid pass through the axial hole 108,and the bottom surface of the conoid 212 can be stopped by the inside surface of the back board 102, so that the axle tenon 204 is fastened in the axial hole 108. The conoid 212 can be composed of elastic materials, such as ABS copolymer, and the flexural strength of the conoid 212 is substantially between 800 kilograms per square centimeter (kg/cm²) and 900 kg/cm², and the flexural elasticity of the conoid 212 is substantially between 25000 kg/cm² and 30000 kg/cm². Furthermore, because the diameter of the axle tenon body 210 is smaller than the diameter of the axial hole 108, the stand 200 can be freely turned oppositely to the display device 100 around the axle tenon 204 regarded as the axis 208.

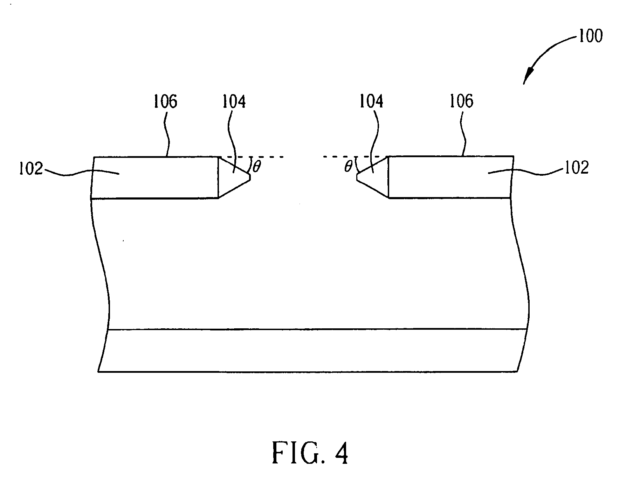

In addition, please refer to Fig. 4, which is a schematic diagram illustrating a cross sectional view of Fig. 2 along with line AA'. As shown in Fig. 4, the surface of the ring fastener 114 facing the outside of the display device 100 has a chamfer θ so as to help the axle tenon 204 to be more easily inserted into the axial hole 108. The present invention is not limited to this, and the surface of the ring fastener 114 facing the inside of the display device 100 also can have a chamfer so as to help the axle tenon 204 to be more easily pulled out from the axial hole 108. In the present invention, at least one of the surface of the ring fastener facing the outside of the display device 100 and the surface of the ring fastener facing the inside of the display device 100 has a chamfer so as to help the axle tenon 204 to be more easily inserted into the axial hole 108 or be more easily pulled out from the axial hole 108. In this embodiment, the angle of the chamfer θ is substantially between 20 degrees and 40 degrees, but is not limited to this.

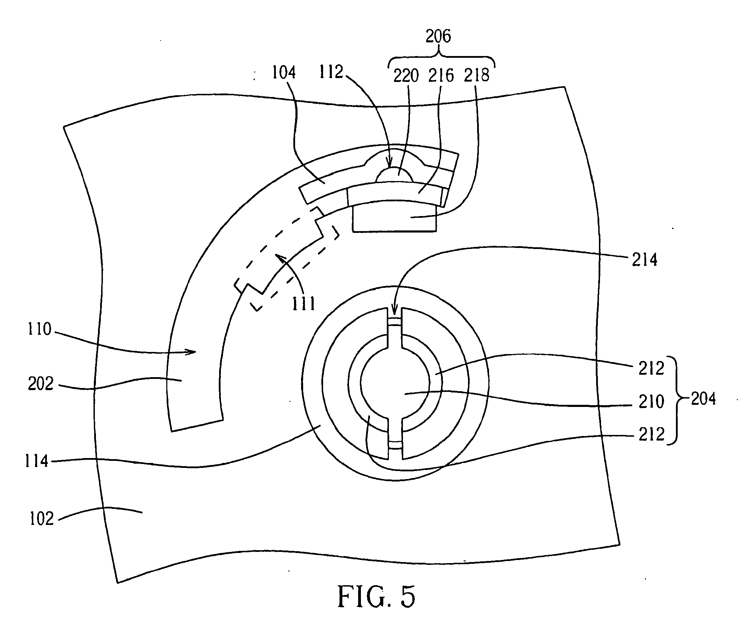

Furthermore, refer to Fig. 2 and Fig. 3 again, and refer to Fig. 5 together. Fig. 5 is a schematic diagram illustrating a structure of the display device inserted with the stand according to the first embodiment of the present invention. The first tenon 206 of this embodiment includes a sliding bump 216, a plane fastening part 218 and a rotationally fastening part 220. The sliding bump 216 is disposed on the stand body 202, and the plane fastening part 218 is disposed at a side of the sliding bump 216. The rotationally fastening part 220 is disposed on the other side of the sliding bump 216 opposite to the plane fastening part 218. In addition, the second hole 110 between the first elastic unit 104 and the axial hole 108 is an arc, and the arc takes the axis 208 of the axial hole 108 as a centre, so that the first tenon 206 can be turned by using the axle tenon 204 as the axis 208 after the first tenon 206 is inserted into the second hole 110 and the sub-hole 111. The sliding bump 216 can be freely turned in the second hole 110 between the first elastic unit 104 and the axial hole 108. In addition, the shape and the area of the plane fastening part 218 are respectively substantially the same as the shape and the area of the sub-hole 111, so that the first tenon 206 is easily inserted into the second hole 110 and the sub-hole 111 and pulled out from the second hole 110 and the sub-hole 111.

It should be noted that there is a first gap 222 between the plane fastening part 218 and the stand body 202, and when the first tenon 206 is inserted into the second hole 110 and turned, the back board 102 is fastened in the first gap 222 between the plane fastening part 218 and the stand body 202, as shown in Fig. 5. Accordingly, the surface of the stand body 202 is in contact with the inside surface of the back board 102. In addition, the rotationally fastening part 220 is a bump, and the shape and the area of the rotationally fastening part 220 are respectively substantially the same as the shape and the area of the rotationally retaining cavity 112, so that the rotationally fastening part 220 of the first tenon 206 can be fastened in the rotationally retaining cavity 112 when the first tenon 206 is turned to an angle. The included angle between the stand 200 and the display device 100 can be fixed at the angle. Furthermore, the display device 100 can have different support angles by providing a plurality of rotationally retaining cavities 112 disposed on the first elastic unit 104. In this embodiment, the rotationally fastening part 220 is directly connected to the stand body 202. But, the rotationally fastening part 220 of the present invention also can not be directly connected to the stand body 202, and the rotationally fastening part 220 can be directly connected to the sliding bump 216 so as to be fastened on the stand body 202.

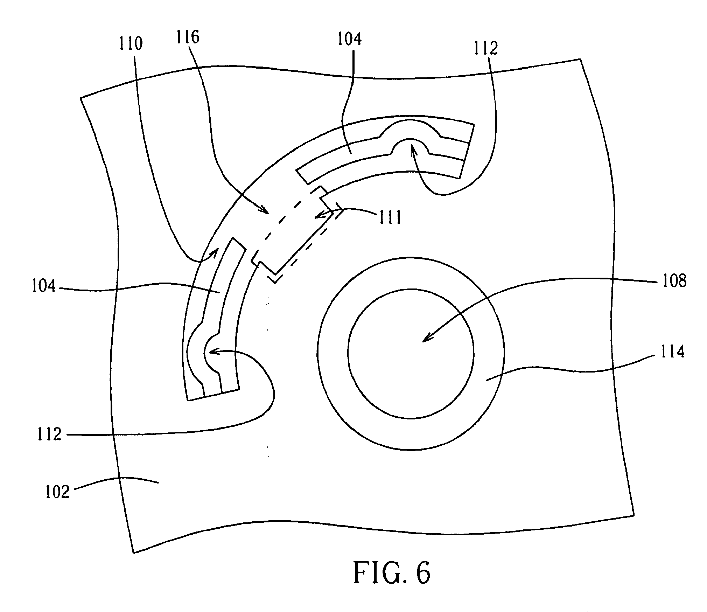

Furthermore, the display device of the present invention is not limited to having only one elastic unit, and can have a plurality of elastic units. Refer to Fig. 6 together with the stand 200 of Fig. 2. Fig. 6 is a schematic diagram illustrating a structure of another example of the display device according to the first embodiment of the present invention. As shown in Fig. 6, the display device 100 further includes a second elastic unit 106 disposed in the second hole 110. An end of the first elastic unit 104 and an end of the second elastic unit 106 are respectively connected to the back board 102 at two sides of the second hole 110, and there is a second gap 116 between the first elastic unit 104 and the second elastic unit 106. In addition, the second gap 116 is slightly larger than the width of the rotationally fastening part 220, so that the rotationally fastening part 220 can be inserted into the second gap 116 while the first tenon 206 is inserted into the second hole 110.

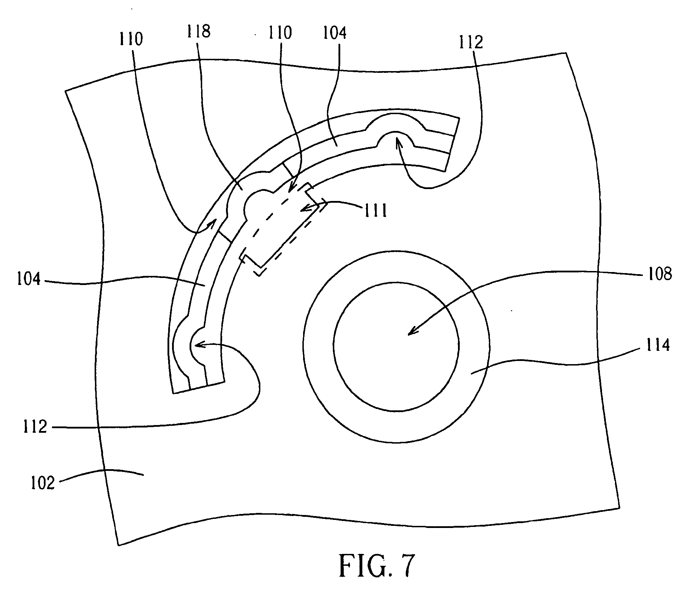

Refer to Fig. 7 together with the stand 200 of Fig. 2. Fig. 7 is a schematic diagram illustrating a structure of another example of the display device according to the first embodiment of the present invention. As shown in Fig. 7, the display device 100 further includes a connecting part 118 disposed in the second hole 110, and the connecting part 118 is connected to the other end of the first elastic unit 104 and the other end of the second elastic unit 106, so that the ends of the first elastic unit 104 and the second elastic unit 106 will not be suspended in midair. Accordingly, the elasticity fatigue of the first elastic unit 104 and the second elastic unit 106 generated by being pushed repeatedly by the first tenon 206 can be avoided, and the durability of the first elastic unit 104 and the second elastic unit 106 can be increased. In addition, the size of the second hole 110 together with the sub-hole 111 between the connecting part 118 and the axial hole 108 is slightly larger than the first tenon 206, so that the first tenon 206 can be inserted into the hole 110 together with the sub-hole 111 between the connecting part 118 and the axial hole 108.

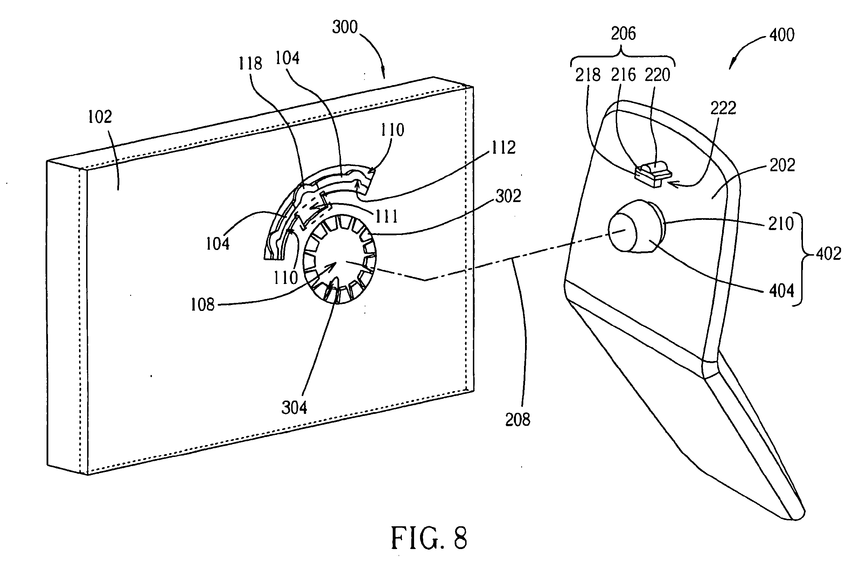

The present invention is not limited to the support structure with display device according to the first embodiment, and can be the support structures with display devices according to other embodiments. For clearly describing the difference between the embodiments of the present invention, the same devices are symbolized by the same symbols, and the same structures are not detailed redundantly. Refer to Fig. 8, which is a schematic diagram illustrating a support structure with display device according to a second embodiment of the present invention. As shown in Fig. 8, as compared with the first embodiment, the display device 300 of this embodiment replaces the ring fastener of the first embodiment with a plurality of fasteners 302. This means that the display device 300 includes a plurality of fasteners 302, and the fasteners 302 are arranged in a ring formation and surrounding the axial hole 108. In addition, any two of the fasteners 302 has a second slot 304 therebetween, so that the fasteners 302 of this embodiment is more elastic than the ring fastener of the first embodiment. The fasteners 302 can be composed of elastic materials, such as ABS copolymer. The flexural strength of the fasteners 302 is substantially between 800 kg/cm² and 900 kg/cm², and the flexural elasticity of the fasteners is substantially between 25000 kg/cm² and 30000 kg/cm². In addition, the stand 400 of this embodiment is different from the stand of the first embodiment, and the axle tenon 402 of the stand 400 in this embodiment does not require the first slot; this means that the top of the conoid 404 does not have the first slot. Although the conoid 404 does not have the first slot, this embodiment uses the fasteners 302 with elasticity, so that the axle tenon 402 is easily inserted into the axial hole 108 or pulled out from the axial hole 108, and the fasteners 302 can stop the axle tenon 402 being loosed and apart from the axial hole 108. But, the conoid 404 of this embodiment is not limited to not having the first slot, and can also have the first slot or a trench without passing though the top of the conoid 212 same as the conoid of the first embodiment so as to help the axle tenon 402 to be easily inserted into the axial hole 108 or pulled out from the axial hole 108. Furthermore, at least one of the surface of each fastener 302 facing the outside of the display device 300 and the surface of each fastener 302 facing the inside of the display device 300 also can have a chamfer, and the present invention is not limited to the fasteners all having a chamfer. The surface of at least one of the fasteners can have the chamfer, and the angle of the chamfer can be substantially between 20 degrees and 40 degrees.

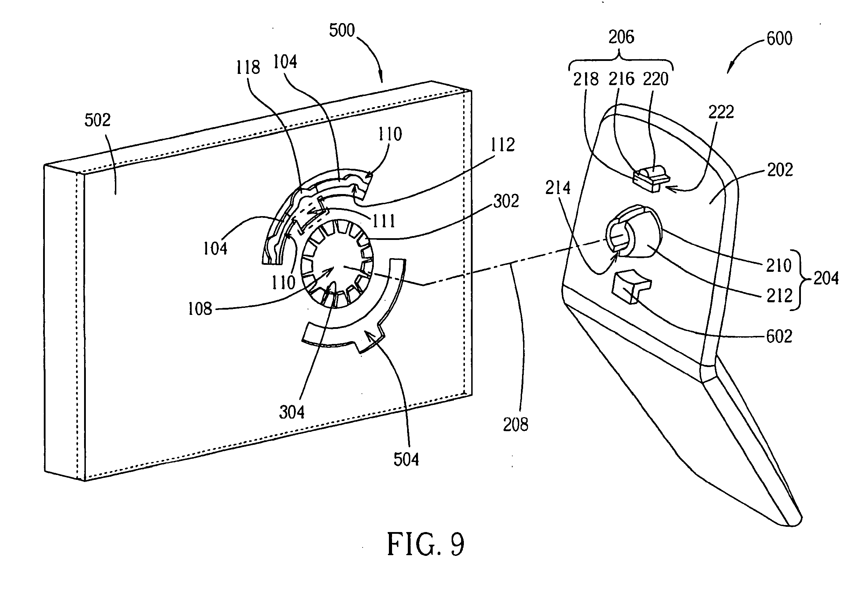

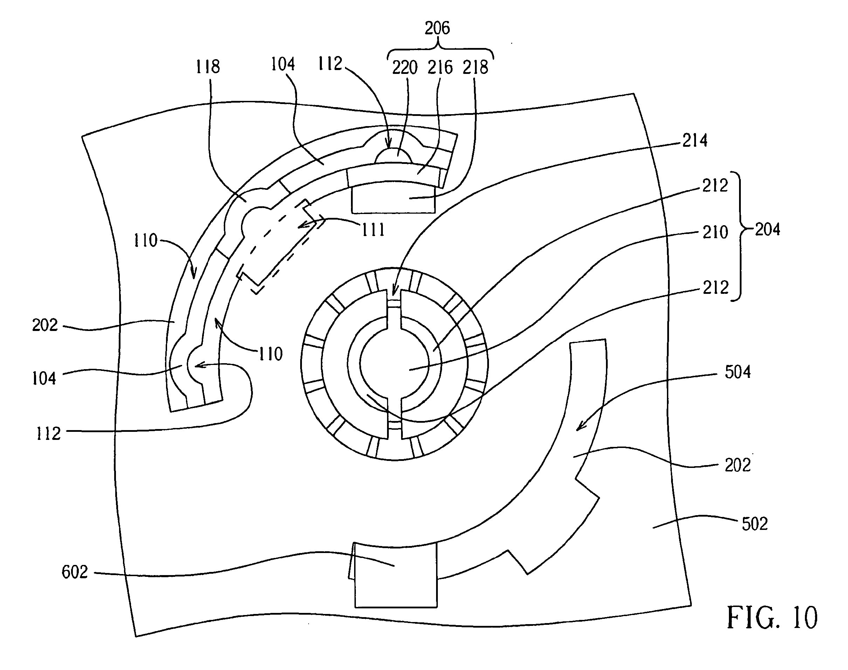

Please refer to Fig. 9 and Fig. 10. Fig. 9 is a schematic diagram illustrating a support structure with display device according to a third embodiment of the present invention. Fig. 10 is a schematic diagram illustrating a structure of the display device inserted with the stand according to the third embodiment of the present invention. As shown in Fig. 9 and Fig. 10, as compared with the first embodiment, the back board 502 of the display device 500 of this embodiment further includes a fastening hole 504, and the fastening hole 504 is disposed at the other side of the axial hole 108 opposite to the second hole 110. In addition, the fastening hole 504 is an arc, and the centre of the arc is also the axis 208 of the axial hole 108. In addition, the stand 600 further includes a second tenon 602 disposed at the other side of the axle tenon 204 opposite to the first tenon 206, and the position of the second tenon 602 and the position of the axle tenon 204 are respectively corresponding to the position of the fastening hole 504 and the position of the axial hole 108, so that the second tenon 602 can be inserted into the fastening hole 504 and turned around so as to fasten the back board 502 between the second tenon 602 and the stand body 202. The surface of the stand body 202 can be in contact with the outside surface of the back board 502. The fastening strength of the stand body 202 fastened on the back board 502 can be increased by means of disposing the second tenon 602 and the fastening hole 504 combined with the plane fastening part 218 of the first tenon 206, the second hole 110 and the sub-hole 111.

The invention can be summarized as a support structure with display device having the display device with the axial hole and the stand having the axle tenon so as to fasten the stand on the back board of the display device, and provides the back board with the hole and the stand with the plane fastening part to fix the surface of the stand on the back board. The included angle between the stand and the display device can be fixed by means of providing the display device including the elastic unit having the rotationally retaining cavity and the stand with the rotationally fastening part. Accordingly, the stand of the present invention can be directly inserted into the back board and fastened on the back board so as to provide good supporting force, and the display device can be disposed upright, horizontally or in any angle, so that the back board does not require being taken apart from the display device in order to fasten the stand on the back board. In addition, the present invention provides the axle tenon with slots and the display device with the hole so as to insert the stand into the display device or pull the stand out from the display device. Therefore, the present invention not only solves the problem of the support structure having an oblique center of gravity in the prior art, but also solves the problem of the hinge structure for supporting display device being not easy to assemble and disassemble. Furthermore, the cost of the hinge structure can be saved, and the operation of inserting or pulling the stand can be directly performed on the back board of the display device so as to save the time for assembling the display device and the stand.

All combinations and sub-combinations of the above-described features as far as they are disclosed by claim 1 also belong to the invention.

## Claims

1. A support structure with display device, comprising :
- a display device (100, 300, 500) comprising:
- a back board (102) having an axial hole (108) and
- a first elastic unit (104), an end of the first elastic unit being connected to the back board (102) ; and
- a stand (200, 400, 600), used for supporting the display device (100, 300, 500), the stand (200, 400, 600) comprising:
- a stand body (202);
- an axle tenon (204), disposed on an end of the stand body (202), the axle tenon (204) defining an axis (208) and allowing the stand (200, 400, 600)and the back board (102) to turn oppositely around said axis (208), while the axle tenon (204) is inserted into the axial hole (108) and fastened in the axial hole (108);
**characterized in that**
- the back board (102) comprises a second hole (110), disposed at a side of the axial hole (108), the first elastic unit (104) protruding inside said second hole (110),
- and **in that** the stand (200, 400, 600) comprises a first tenon (206), disposed on an end of the stand body (202),
the first elastic unit (104) being pushed by the first tenon (206) so as to be shifted in the second hole (110) while the first tenon (206) is inserted into the second hole (110) and turned around the axis (208) in the second hole (110) between the first elastic unit (104) and the axial hole (108).

2. The support structure with display device (100, 300, 500) of claim 1, **characterized in that** a surface of the first elastic unit (104) opposite to the axial hole (108) has a rotationally fastening concavity (112).

3. The support structure with display device (100, 300, 500) of claim 2, **characterized in that** the first tenon (206) comprises a rotationally fastening part (220), while turning the first tenon (206) to an angle, the rotationally fastening part (220) of the first tenon (206) being fixed at the rotationally fastening concavity (112).

4. The support structure with display device (100, 300, 500) of claim 3, **characterized in that** a shape of the rotationally fastening part (220) is substantially the same as a shape of the rotationally fastening concavity (112), and an area of the rotationally fastening part (220) is substantially the same as an area of the rotationally fastening concavity (112).

5. The support structure with display device (100, 300, 500) of claim 1, **characterized in that** the first tenon (206) comprises a plane fastening part (218), and the plane fastening part (218) and the stand body (202) has a first gap (222) therebetween, in particular, **characterized in that** the back board (102) further comprises a sub-hole (111), connected to a side of the second hole (110) opposite to the axial hole (108), and a shape and an area of the plane fastening part (218) are respectively substantially the same as a shape and an area of the sub-hole (111).

6. The support structure with display device (100, 300, 500) of claim 1, **characterized in that** the display device (100, 300, 500) further comprises a second elastic unit (106) and a connecting part (118), and the connecting part (118) is disposed in the second hole (110) and connects the other end of the first elastic unit (104) and an end of the second elastic unit (106), in particular **characterized in that** the first tenon (206) is used to be inserted into the second hole (110) between the connecting part (118) and the axial hole (108).

7. The support structure with display device (100, 300, 500) of claim 1, **characterized in that** the display device (100, 300, 500) further comprises a second elastic unit (106) disposed in the second hole (110), the first elastic unit (104) and the second elastic unit (106) respectively connected to the back board (102) at two side of the second hole (110), and the first elastic unit (104) and the second elastic unit (106) have a second gap (116) therebetween, in particular **characterized in that** the second gap (116) is larger than a width of the rotationally fastening part (220).

8. The support structure with display device (100, 300, 500) of claim 1, **characterized in that** the back board (102) comprises a ring fastener (114) surrounding the axial hole (108), in particular **characterized in that** a surface of the ring fastener (114) has a chamfer, further in particular **characterized in that** an angle of the chamfer is between 20 degrees and 40 degrees.

9. The support structure with display device (100, 300, 500) of claim 1, **characterized in that** the back board (102) comprises a plurality of fasteners (302), and the fasteners (302) surround the axial hole (108) in a ring formation, in particular **characterized in that** a surface of one of the fasteners (302) has a chamfer.

10. The support structure with display device (100, 300, 500) of claim 1, **characterized in that** the axle tenon (204) comprises a conoid (212), in particular **characterized in that** the conoid (212) is a hollow structure, further in particular **characterized in that** the conoid (212) has at least one slot (214).

11. The support structure with display device (100, 300, 500) of claim 10, **characterized in that** the slot (214) passes through the top of the conoid (212).

12. The support structure with display device (100, 300, 500) of claim 10, **characterized in that** the conoid (212) is composed of an elastic material, in particular **characterized in that** the elastic material is an acrylonitrile-butadiene-styrene copolymer.

13. The support structure with display device (100, 300, 500) of claim 1, **characterized in that** the back board (102) further comprises a fastening hole (504), and the fastening hole (504) is disposed at the other side of the axial hole (108) opposite to the second hole (110), in particular **characterized in that** the stand (200, 400, 600) further comprises a second tenon (602) disposed on the stand body (202) and located at the other side of the axle tenon (204) opposite to the first tenon (206), and the second tenon (204) is used to be inserted into the fastening hole (504) and turned so as to fasten the back board (102) between the second tenon (204) and the stand body (202).

## Patentansprüche

1. Stützstruktur mit Anzeigevorrichtung, umfassend:
- eine Anzeigevorrichtung (100, 300, 500), umfassend:
- eine Rückwand (102) mit einem axialen Loch (108) und
- eine erste elastische Einheit (104), wobei ein Ende der ersten elastischen Einheit mit der Rückwand (102) verbunden ist; und
- einen Ständer (200, 400, 600), der zum Stützen der Anzeigevorrichtung (100, 300, 500) verwendet wird, wobei der Ständer (200, 400, 600) umfasst:
- einen Ständerkörper (202);
- einen Achszapfen (204), der an einem Ende des Ständerkörpers (202) angeordnet ist, wobei der Achszapfen (204) eine Achse (208) definiert und dem Ständer (200, 400, 600) und der Rückwand (102) ermöglicht, entgegengesetzt um die Achse (208) zu drehen, während der Achszapfen (204) in das Axialloch (108) eingesetzt und in dem Axialloch (108) befestigt ist;
**dadurch gekennzeichnet, dass**
- die Rückwand (102) ein zweites Loch (110) umfasst, das an einer Seite des axialen Lochs (108) angeordnet ist, wobei die erste elastische Einheit (104) in das zweite Loch (110) vorsteht,
- und **dadurch**, dass der Ständer (200, 400, 600) einen ersten Zapfen (206) umfasst, der auf einem Ende des Ständerkörpers (202) angeordnet ist,
wobei die erste elastische Einheit (104) von dem ersten Zapfen (206) so geschoben wird, dass sie in das erste Loch (110) verschoben wird, während der erste Zapfen (206) in das zweite Loch (110) eingesetzt ist und um die Achse (208) in dem zweiten Loch (110) zwischen der ersten elastischen Einheit (104) und dem axialen Loch (108) gedreht wird.

2. Stützstruktur mit Anzeigevorrichtung (100, 300, 500) nach Anspruch 1, **dadurch gekennzeichnet, dass** eine Oberfläche der ersten elastischen Einheit (104) gegenüber dem axialen Loch (108) eine drehend befestigende Innenwölbung (112) aufweist.

3. Stützstruktur mit Anzeigevorrichtung (100, 300, 500) nach Anspruch 2, **dadurch gekennzeichnet, dass** der erste Zapfen (206) ein drehend befestigendes Teil (220) umfasst, während der erste Zapfen (206) zu einem Winkel gedreht wird, wobei das drehend befestigende Teil (220) des ersten Zapfens (206) an der drehend befestigenden Innenwölbung (112) befestigt ist.

4. Stützstruktur mit Anzeigevorrichtung (100, 300, 500) nach Anspruch 3, **dadurch gekennzeichnet, dass** eine Form des drehend befestigenden Teils (220) im Wesentlichen gleich der Form der drehend befestigenden Innenwölbung (112) ist, und ein Bereich des drehend befestigenden Teils (220) im Wesentlichen gleich einem Bereich der drehend befestigenden Innenwölbung (112) ist.

5. Stützstruktur mit Anzeigevorrichtung (100, 300, 500) nach Anspruch 1, **dadurch gekennzeichnet, dass** der erste Zapfen (206) ein eine Ebene befestigendes Teil (218) umfasst und das eine Ebene befestigendes Teil (218) und der Ständerkörper (202) einen ersten Spalt (222) zwischen sich aufweisen, insbesondere **dadurch gekennzeichnet, dass** die Rückwand (102) ferner ein Nebenloch (111) umfasst, das mit einer Seite des zweiten Lochs (110) gegenüber dem axialen Loch (108) verbunden ist, und eine Form und ein Bereich des eine Ebene befestigenden Teils (218) im Wesentlichen jeweils gleich einer Form und einem Bereich des Nebenlochs (111) sind.

6. Stützstruktur mit Anzeigevorrichtung (100, 300, 500) nach Anspruch 1, **dadurch gekennzeichnet, dass** die Anzeigevorrichtung (100, 300, 500) ferner eine zweite elastische Einheit (106) und ein Verbindungsteil (118) umfasst, und das Verbindungsteil (118) in dem zweiten Loch (110) angeordnet ist und das andere Ende der ersten elastischen Einheit (104) und ein Ende der zweiten elastischen Einheit (106) verbindet, insbesondere **dadurch gekennzeichnet, dass** der erste Zapfen (206) verwendet wird, um in das zweite Loch (110) zwischen dem Verbindungsteil (118) und dem axialen Loch (108) eingesetzt zu werden.

7. Stützstruktur mit Anzeigevorrichtung (100, 300, 500) nach Anspruch 1, **dadurch gekennzeichnet, dass** die Anzeigevorrichtung (100, 300, 500) ferner eine zweite elastische Einheit (106) umfasst, die in dem zweiten Loch (110) angeordnet ist, wobei die erste elastische Einheit (104) und die zweite elastische Einheit (106) jeweils mit der Rückwand (102) an zwei Seiten des zweiten Lochs (110) verbunden sind, und die erste elastische Einheit (104) und die zweite elastische Einheit (106) einen zweiten Spalt (116) zwischen sich aufweisen, insbesondere **dadurch gekennzeichnet, dass** der zweite Spalt (116) größer als eine Breite des drehend befestigenden Teils (220) ist.

8. Stützstruktur mit Anzeigevorrichtung (100, 300, 500) nach Anspruch 1, **dadurch gekennzeichnet, dass** die Rückwand (102) eine Ringbefestigung (114), die das axiale Loch (108) umgibt, umfasst, insbesondere **dadurch gekennzeichnet, dass** eine Oberfläche der Ringbefestigung (114) eine Abschrägung aufweist, ferner insbesondere **dadurch gekennzeichnet, dass** ein Winkel der Abschrägung zwischen 20 Grad und 40 Grad liegt.

9. Stützstruktur mit Anzeigevorrichtung (100, 300, 500) nach Anspruch 1, **dadurch gekennzeichnet, dass** die Rückwand (102) eine Vielzahl von Befestigungen (302) umfasst, und die Befestigungen (302) das axiale Loch (108) in einer Ringformation umgeben, insbesondere **dadurch gekennzeichnet, dass** eine Oberfläche der einen der Befestigungen (302) eine Abschrägung aufweist.

10. Stützstruktur mit Anzeigevorrichtung (100, 300, 500) nach Anspruch 1, **dadurch gekennzeichnet, dass** der Achszapfen (204) ein Konoid (212) umfasst, insbesondere **dadurch gekennzeichnet, dass** das Konoid (212) eine hohle Struktur ist, ferner insbesondere **dadurch gekennzeichnet, dass** das Konoid (212) zumindest einen Schlitz (214) aufweist.

11. Stützstruktur mit Anzeigevorrichtung (100, 300, 500) nach Anspruch 10, **dadurch gekennzeichnet, dass** der Schlitz (214) durch die Oberseite des Konoids (212) hindurch verläuft.

12. Stützstruktur mit Anzeigevorrichtung (100, 300, 500) nach Anspruch 10, **dadurch gekennzeichnet, dass** das Konoid (212) aus einem elastischen Material besteht, insbesondere **dadurch gekennzeichnet, dass** das elastische Material ein Acrylnitril-Butadien-Styren-Copolymer ist.

13. Stützstruktur mit Anzeigevorrichtung (100, 300, 500) nach Anspruch 1, **dadurch gekennzeichnet, dass** die Rückwand (102) ferner ein Befestigungsloch (504) umfasst, und das Befestigungsloch (504) an der anderen Seite des axialen Lochs (108) gegenüber dem zweiten Loch (110) angeordnet ist, insbesondere **dadurch gekennzeichnet, dass** der Ständer (200, 400, 600) ferner einen zweiten Zapfen (602) umfasst, der auf dem Ständerkörper (202) angeordnet ist und an der anderen Seite des Achszapfens (204) gegenüber dem ersten Zapfen (206) liegt, und der zweite Zapfen (204) verwendet wird, um in das Befestigungsloch (504) eingesetzt und so gedreht zu werden, dass die Rückwand (102) zwischen dem zweiten Zapfen (204) und dem Ständerkörper (202) befestigt wird.

## Revendications

1. Structure de support avec dispositif d'affichage, comprenant :
un dispositif d'affichage (100, 300, 500) comprenant :
un panneau arrière (102) ayant un trou axial (108), et
une première unité élastique (104), une extrémité de la première unité élastique étant raccordée au panneau arrière (102) ; et
un support (200, 400, 600), utilisé pour supporter le dispositif d'affichage (100, 300, 500), le support (200, 400, 600) comprenant :
un corps de support (202) ;
un tenon d'axe (204) disposé sur une extrémité du corps de support (202), le tenon d'axe (204) définissant un axe (208) et permettant au support (200, 400, 600) et au panneau arrière (102) de tourner de manière opposée autour dudit axe (208), alors que le tenon d'axe (204) est inséré dans le trou axial (108) et fixé dans le trou axial (108) ;
**caractérisée en ce que** :
le panneau arrière (102) comprend un deuxième trou (110), disposé au niveau d'un côté du trou axial (108), la première unité élastique (104) faisant saillie à l'intérieur dudit deuxième trou (110),
et **en ce que** le support (200, 400, 600) comprend un premier tenon (206) disposé sur une extrémité du corps de support (202),
la première unité élastique (104) étant poussée par le premier tenon (206) afin d'être déplacée dans le deuxième trou (110) alors que le premier tenon (206) est inséré dans le deuxième trou (110) et entraîné en rotation autour de l'axe (208) dans le deuxième trou (110) entre la première unité élastique (104) et le trou axial (108).

2. Structure de support avec dispositif d'affichage (100, 300, 500) selon la revendication 1, **caractérisée en ce qu'**une surface de la première unité élastique (104) opposée au trou axial (108) a une concavité de fixation rotative (112).

3. Structure de support avec dispositif d'affichage (100, 300, 500) selon la revendication 2, **caractérisée en ce que** le premier tenon (206) comprend une partie de fixation rotative (220), tout en faisant tourner le premier tenon (206) selon un angle, la partie de fixation rotative (220) du premier tenon (206) étant fixée sur la concavité de fixation rotative (112).

4. Structure de support avec dispositif d'affichage (100, 300, 500) selon la revendication 3, **caractérisée en ce qu'**une forme de la partie de fixation rotative (220) est sensiblement la même qu'une forme de la concavité de fixation rotative (112), et une aire de la partie de fixation rotative (220) est sensiblement la même qu'une aire de la concavité de fixation rotative (112).

5. Structure de support avec dispositif d'affichage (100, 300, 500) selon la revendication 1, **caractérisée en ce que** le premier tenon (206) comprend une partie de fixation plane (218), et la partie de fixation plane (218) et le corps de support (202) ont un premier espace (222) entre eux, en particulier, **caractérisée en ce que** le panneau arrière (102) comprend en outre un trou auxiliaire (111), raccordé à un côté du deuxième trou (110) opposé au trou axial (108), et une forme et une aire de la partie de fixation plane (218) sont respectivement sensiblement les mêmes qu'une forme et une aire du trou auxiliaire (111).

6. Structure de support avec dispositif d'affichage (100, 300, 500) selon la revendication 1, **caractérisée en ce que** le dispositif d'affichage (100, 300, 500) comprend en outre une deuxième unité élastique (106) et une partie de raccordement (118), et la partie de raccordement (118) est disposée dans le deuxième trou (110) et raccorde l'autre extrémité de la première unité élastique (104) et une extrémité de la deuxième unité élastique (106), en particulier **caractérisée en ce que** le premier tenon (206) est utilisé pour être inséré dans le deuxième trou (110) entre la partie de raccordement (118) et le trou axial (108).

7. Structure de support avec dispositif d'affichage (100, 300, 500) selon la revendication 1, **caractérisée en ce que** le dispositif d'affichage (100, 300, 500) comprend en outre une deuxième unité élastique (106) disposée dans le deuxième trou (110), la première unité élastique (104) et la deuxième unité élastique (106) étant respectivement raccordées au panneau arrière (102) sur deux côtés du deuxième trou (110), et la première unité élastique (104) et la deuxième unité élastique (106) ont un deuxième espace (116) entre elles, en particulier **caractérisée en ce que** le deuxième espace (116) est plus grand qu'une largeur de la partie de fixation rotative (220).

8. Structure de support avec dispositif d'affichage (100, 300, 500) selon la revendication 1, **caractérisée en ce que** le panneau arrière (102) comprend une fixation annulaire (114) entourant le trou axial (108), en particulier **caractérisée en ce qu'**une surface de la fixation annulaire (114) a un chanfrein, particulièrement **caractérisée en outre en ce qu'**un angle du chanfrein est compris entre 20 degrés et 40 degrés.

9. Structure de support avec dispositif d'affichage (100, 300, 500) selon la revendication 1, **caractérisée en ce que** le panneau arrière (102) comprend une pluralité de fixations (302), et les fixations (302) entourent le trou axial (108) selon une formation annulaire, en particulier **caractérisée en ce qu'**une surface de l'une des fixations (302) a un chanfrein.

10. Structure de support avec dispositif d'affichage (100, 300, 500) selon la revendication 1, **caractérisée en ce que** le tenon d'axe (204) comprend un conoïde (212), en particulier **caractérisée en ce que** le conoïde (212) est une structure creuse, particulièrement **caractérisée en outre en ce que** le conoïde (212) a au moins une fente (214).

11. Structure de support avec dispositif d'affichage (100, 300, 500) selon la revendication 10, **caractérisée en ce que** la fente (214) passe à travers la partie supérieure du conoïde (212).

12. Structure de support avec dispositif d'affichage (100, 300, 500) selon la revendication 10, **caractérisée en ce que** le conoïde (212) est composé d'un matériau élastique, en particulier **caractérisée en ce que** le matériau élastique est un copolymère d'acrylonitrile - butadiène - styrène.

13. Structure de support avec dispositif d'affichage (100, 300, 500) selon la revendication 1, **caractérisée en ce que** le panneau arrière (102) comprend en outre un trou de fixation (504), et le trou de fixation (504) est disposé au niveau de l'autre côté du trou axial (108) opposé au deuxième trou (110), en particulier **caractérisée en ce que** le support (200, 400, 600) comprend en outre un deuxième tenon (602) disposé sur le corps de support (202) et positionné de l'autre côté du tenon d'axe (204) opposé au premier tenon (206) et le deuxième tenon (204) est utilisé pour être inséré dans le trou de fixation (504) et entraîné en rotation afin de fixer le panneau arrière (102) entre le deuxième tenon (204) et le corps de support (202).
